# EUROPEAN PATENT APPLICATION

(11) **EP 4 848 526 A1**
(43) Date of publication of application: **02.12.2026**
(21) Application number: 25769165.9
(22) Date of filing: 08.02.2025
(51) Int. Cl.: H02J 7/00, H02J 15/00

(54) **CLUSTER CONTROL BOX FOR BATTERY CLUSTER, AND ENERGY STORAGE DEVICE**

(30) Priority: 15.03.2024 CN 202420526070 U
(71) Applicant: Huawei Digital Power Technologies Co., Ltd., Shenzhen, Guangdong 518043 (CN)
(72) Inventor: SHENG, Ren, Shenzhen, Guangdong 518043 (CN); LV, Quanxu, Shenzhen, Guangdong 518043 (CN); ZHANG, Ao, Shenzhen, Guangdong 518043 (CN)
(74) Representative: Gill Jennings & Every LLP
(86) International application number: PCT/CN2025/076442
(87) International publication number: WO 2025/189991

(57) **Abstract**

This application provides a rack control module of a battery rack and an energy storage apparatus. The rack control module includes a housing, a switch component located in the housing, an input interface and an output interface that are disposed on the housing, an input wire configured to connect the input interface and the switch component, and an output wire configured to connect the output interface and the switch component. In a height direction of the housing, heights of the input interface and the output interface relative to a bottom wall of the housing are different, and the input wire and the output wire are stacked; and the input wire or the output wire extends along a depth direction of the housing, and the switch component is disposed in the extension direction. In this solution, a new layout solution for a battery rack control module is used. In this solution, a power loop is arranged in a square shape, to make full use of vertical space through three-dimensional overlapping, thereby ensuring high space utilization and a compact layout. Compared with an existing solution, this greatly shortens a power path/loop, reduces a used length of a copper bar, reduces costs, and improves system efficiency.

## Description

This application claims priority to Chinese Patent Application No. 202420526070.X, filed with the China National Intellectual Property Administration on March 15, 2024 and entitled "RACK CONTROL MODULE OF BATTERY RACK AND ENERGY STORAGE APPARATUS", which is incorporated herein by reference in its entirety.

### TECHNICAL FIELD

This application relates to the field of energy storage technologies, and in particular, to a rack control module of a battery rack and an energy storage apparatus.

### BACKGROUND

In a related technology, a rack control module is configured to connect between a battery rack and a PCS (power conversion system), to control charging and discharging of the battery rack and ensure safety performance of charging and discharging of the battery rack. A switch component, for example, a fuse, a contactor, or a disconnector, is disposed in the rack control module. However, due to improper design of the rack control module in the related technology, the switch component occupies most space of the rack control module. Consequently, the rack control module becomes bulky, functionally singular, and incapable of integrating more functional components, resulting in low space utilization of the rack control module.

### SUMMARY

Embodiments of this application provide a rack control module of a battery rack and an energy storage apparatus, to improve space utilization of the rack control module.

According to a first aspect, an embodiment of this application provides a rack control module of a battery rack. The rack control module includes a housing, an input interface and an output interface that are disposed on the housing, a switch component located in the housing, an input wire, and an output wire. The input interface is configured to electrically connect to an interface of the battery rack, the output interface is configured to electrically connect to a power converter, and the battery rack is a plurality of battery packs connected in series or in parallel; the switch component is configured to disconnect a line between the input interface and the output interface; and the input wire is configured to connect the input interface and the switch component, and the output wire is configured to connect the output interface and the switch component. In a height direction of the housing, heights of the input interface and the output interface relative to a bottom wall of the housing are different, and the input wire and the output wire are stacked; and the input wire or the output wire extends along a depth direction of the housing, and the switch component is disposed in the extension direction.

In this embodiment, because in the height direction of the housing, the heights of the input interface and the output interface relative to the bottom wall of the housing are different, and the input wire and the output wire are stacked, space of the housing can be fully utilized in the height direction of the housing, thereby improving utilization of space in the height direction of the housing. Therefore, more space can be reserved in a width direction of the housing to install another functional component. Similarly, because the input wire or the output wire extends along the depth direction of the housing, and the switch component is disposed in the extension direction, the switch component is centralized in the direction in which the input wire or the output wire extends along the depth direction of the housing. Therefore, more space can also be saved in the width direction of the housing to install another functional component, thereby enriching functions of the rack control module.

In some embodiments, the switch component includes a disconnector, and the output wire or the input wire and the disconnector are spaced apart and at least partially overlap in the height direction of the housing. In this embodiment, the output wire or the input wire and the disconnector are spaced apart and at least partially overlap in the height direction of the housing, so that space that is located above or below the disconnector and that is in the housing can be fully utilized in the height direction of the housing, thereby improving compactness of a layout. Therefore, more space can be saved in the width direction of the housing to deploy another component, thereby increasing function diversity.

In some embodiments, the disconnector and one of the output wire and the input wire are spaced apart and at least partially overlap in the height direction of the housing, and the disconnector and the other of the output wire and the input wire are spaced apart and at least partially overlap in the width direction of the housing. In this embodiment, because the disconnector and one of the output wire and the input wire are spaced apart and at least partially overlap in the height direction of the housing, space of the housing can be fully utilized in the height direction of the housing. The disconnector and the other of the output wire and the input wire are spaced apart and at least partially overlap in the width direction of the housing, so that an increase in the thickness of the housing in the height direction of the housing can be effectively avoided. In addition, for the standardized disconnector, a connecting end of the disconnector is usually located at two ends of the width direction of the housing, and the other of the output wire and the input wire is disposed on one side of the disconnector in the width direction of the housing, so that the disconnector can be conveniently connected to the wire, thereby effectively reducing a length of the wire.

In some embodiments, the input wire includes a positive input wire and a negative input wire, the output wire includes a positive output wire and a negative output wire, the disconnector and one of the positive input wire and the negative input wire are spaced apart and at least partially overlap in the height direction of the housing, and the positive output wire, the negative output wire, and the other of the positive input wire and the negative input wire are spaced apart and at least partially overlap in the height direction of the housing. In this embodiment, because the disconnector and one of the positive input wire and the negative input wire are spaced apart and at least partially overlap in the height direction of the housing, utilization of space in the height direction of the housing can be improved. Similarly, because the positive output wire, the negative output wire, and the other of the positive input wire and the negative input wire are spaced apart and at least partially overlap in the height direction of the housing, utilization of space in the height direction of the housing can also be improved. Therefore, more space can be saved to arrange more components in the housing.

In some embodiments, in the depth direction of the housing, the housing includes a front panel and a back panel that are opposite to each other, and the disconnector is located between the front panel and the back panel and is close to the front panel. In this embodiment, after the rack control module is assembled in a cabinet of an energy storage cabinet, usually, only the front panel of the housing is exposed and not blocked, so that the disconnector is located between the front panel and the back panel and is close to the front panel. This can reduce a length of a rotating shaft that is of the disconnector and that is configured to install a knob, and further provide a higher possibility for a proper layout of another component of the switch component, for example, a fuse or a contactor, so that lengths of wires connected to the components of the switch component can be reduced while a layout of the switch component is more compact.

In some embodiments, the switch component further includes the contactor, and the contactor is located between the disconnector and the back panel in the depth direction of the housing. In this embodiment, because the contactor is located between the disconnector and the back panel in the depth direction of the housing, and the extension direction of the input wire or the output wire is the depth direction of the housing, space in the depth direction of the housing can be fully utilized. Therefore, more space can be saved in the width direction of the housing, thereby improving layout rationality. In addition, an extension direction of a wire used to connect the contact and the disconnector may also be towards the depth direction of the housing, eliminating the need for excessive bending, so that a total length of the wires connected to the components of the switch component can be effectively reduced.

In some embodiments, the switch component further includes a leakage current sensor, the rack control module further includes a circuit board, the circuit board and the disconnector are spaced apart on the bottom wall of the housing, the leakage current sensor is connected to the circuit board, a signal processing circuit on the circuit board is configured to process a signal fed back by the leakage current sensor, and the leakage current sensor is located between the disconnector and the back panel in the depth direction of the housing. In this embodiment, the circuit board cooperates with the leakage current sensor, so that precision of current detection can be effectively improved. The circuit board configured to process the signal of the leakage current sensor and the disconnector are spaced apart. Because the disconnector and the leakage current sensor are arranged along the depth direction of the housing, and the input wire and the output wire are stacked in the height direction of the housing, the switch component can be compactly arranged in the housing and occupy smaller space of the housing. This provides a possibility for installing the circuit board, thereby providing a possibility for using the leakage current sensor. Therefore, when an overall volume of the rack control module remains unchanged, detection precision of a current flowing through the switch component is improved.

In some embodiments, the rack control module further includes a battery control module disposed in the housing, the battery control module is configured to collect information about the battery pack, and the battery control module and the disconnector are arranged along the width direction of the housing. In this embodiment, because the battery control module and the switch component are arranged along the width direction of the housing, and the switch component is arranged in the extension direction of the input wire or the output wire towards the depth direction of the housing, the switch component and the battery control module can be effectively isolated, to effectively avoid signal interference of the switch component to the battery control module.

In some embodiments, the input interface and the output interface are spaced apart in the height direction of the housing, the input wire extends along the depth direction of the housing, a part of the output wire extends along the depth direction of the housing, and the part of the output wire and the input wire are spaced apart and overlap in the height direction of the housing. In this embodiment, because the part of the output wire extends along the depth direction of the housing, and the part of the output wire and the input wire are spaced apart and overlap in the height direction of the housing, utilization of space in the height direction of the housing can be effectively improved. Therefore, space in the width direction of the housing is saved to arrange another functional component.

In some embodiments, the input wire includes a positive input wire and a negative input wire, the output wire includes a positive output wire and a negative output wire, parts, extending along the depth direction of the housing, of the positive input wire and the positive output wire are spaced apart and overlap in the height direction of the housing, and parts, extending along the depth direction of the housing, of the negative input wire and the negative output wire are spaced apart and overlap in the height direction of the housing. In this embodiment, first, because the parts, extending along the depth direction of the housing, of the positive input wire and the positive output wire are spaced apart and overlap in the height direction of the housing, and the parts, extending along the depth direction of the housing, of the negative input wire and the negative output wire are spaced apart and overlap in the height direction of the housing, utilization of space in the height direction of the housing can be effectively improved, to save space in the width direction of the housing. In addition, because the positive input wire and the positive output wire are arranged in the height direction of the housing, and the negative input wire and the negative output wire are arranged in the height direction of the housing, a distance between the positive input wire and the negative output wire can be properly increased, and a distance between the negative input wire and the positive output wire can be properly increased, to reduce a risk of a short circuit.

In some embodiments, the switch component includes a fuse and a contactor, the fuse and the contactor are disposed in the extension direction, and the fuse and the contactor are arranged along the depth direction of the housing. In this embodiment, because the fuse and the contactor are disposed in the extension direction, and the fuse and the contactor are arranged along the depth direction of the housing, space of the housing in the depth direction of the housing can be fully utilized, to save more space in the width direction of the housing.

In some embodiments, the switch component includes a contactor; along the depth direction of the housing, the contactor is disposed in the extension direction; and in the extension direction, the contactor and a front panel of the housing are spaced apart to form reserved space, and the reserved space is used to install a disconnector. In this embodiment, by setting the reserved space, a user or a downstream manufacturer may determine, based on a requirement, whether to install the disconnector. When the disconnector needs to be installed, the user or the downstream manufacturer may install the disconnector; and when the disconnector does not need to be installed, the disconnector may be directly used. Therefore, reconstruction space of the rack control module in this embodiment is increased, thereby improving user experience.

In some embodiments, the front panel of the housing includes a first panel and a second panel that are parallel to each other and a connecting panel that connects the first panel and the second panel, the first panel protrudes from the second panel to an outer side of the housing along the width direction of the housing, the output interface is disposed on the first panel, the input interface is disposed on the second panel, and the input interface and the output interface are spaced apart in the height direction of the housing. In this embodiment, the first panel protrudes from the second panel to the outer side of the housing along the width direction of the housing, so that a creepage distance between the input interface and the output interface can be increased, thereby improving safety performance of the rack control module.

In some embodiments, both the input wire and the output wire are hard copper bars. In this embodiment, because both the input wire and the output wire are the hard copper bars and have specific strength, when the input wire and the output wire are stacked in the height direction of the housing, a short circuit caused by contact between the input wire and the output wire and a component of the switch component can be avoided while space in the height direction of the housing is fully utilized, thereby ensuring safety.

According to a second aspect, an embodiment of this application provides an energy storage apparatus. The energy storage apparatus includes a box, a battery rack located in the box, a power converter, and the rack control module according to any one of the first aspect, an input interface of the rack control module is configured to electrically connect to the battery rack, and an output interface of the rack control module is configured to electrically connect to the power converter.

### BRIEF DESCRIPTION OF DRAWINGS

FIG. 1 is a diagram of a structure of an energy storage apparatus according to an embodiment of this application;
FIG. 2 is a diagram of a structure of a rack control module according to an embodiment of this application;
FIG. 3 is a diagram of a partial structure of the rack control module in FIG. 2 with a top wall being hidden;
FIG. 4 is a top view of the rack control module in FIG. 3;
FIG. 5 is a diagram of a position relationship between a disconnector and an output wire in the rack control module in FIG. 3;
FIG. 6 is a brief diagram of another rack control module according to an embodiment of this application;
FIG. 7 is a front view of the rack control module in the embodiment of FIG. 6;
FIG. 8 is a brief diagram of still another rack control module according to an embodiment of this application; and
FIG. 9 is a front view of the rack control module in the embodiment of FIG. 8.

### Reference numerals:

X: width direction of a housing; Y: depth direction of the housing; Z: height direction of the housing; 1000: energy storage apparatus;
11: cabinet body; 101: battery compartment; 102: electrical compartment;
20: battery rack; 21: battery pack;
30: rack control module; 31: battery control module; 32: circuit board; 321: first part; 322: second part; 33: power supply module;
40: housing; 41: bottom wall; 411: first region; 412: second region; 413: reserved space; 42: top wall; 43: side wall; 431: front panel; 432: first panel; 433: second panel; 434: connecting panel; 435: back panel;
51: input interface; 511: positive input interface; 512: negative input interface;
52: output interface; 521: positive output interface; 522: negative output interface;
53: input wire; 531: positive input wire; 532: negative input wire;
54: output wire; 541: first segment; 542: second segment; 543: middle segment; 544: positive output wire; 545: negative output wire;
55: weak-current interface;
56: connector;
60: switch component; 61: fuse; 62: contactor; 63: leakage current sensor; 64: shunt; 65: disconnector; 651: current input end; 652: current output end; 653: knob; 654: rotating shaft;
80: power converter; 81: PCS converter; 82: DC/DC converter.

### DESCRIPTION OF EMBODIMENTS

The following first explains and describes some terms in embodiments of this application.

In the specification, claims, and accompanying drawings of embodiments of this application, the terms "first", "second", "third", "fourth", and the like are intended to distinguish between similar objects but do not necessarily indicate a specific order or sequence. It should be understood that data used in this way is interchangeable in appropriate circumstances, so that embodiments of this application described herein can be implemented in an order different from the order shown or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In this specification, terms such as "perpendicularity" and "parallelism" are explained.

Perpendicular: Perpendicular defined in this application is not limited to absolutely perpendicular intersection (a 90-degree included angle), allowing a case in which there is no absolutely perpendicular intersection caused by factors such as an assembly tolerance, a design tolerance, and impact of structural flatness and allowing an error within a small angle range. For example, an assembly error range of 80 degrees to 100 degrees may be understood as being perpendicular.

Parallelism: The parallelism defined in this application is not limited to absolute parallelism. The defined parallelism may be understood as being almost parallel, allowing cases of non-absolute parallelism caused by factors such as an assembly tolerance, a design tolerance, and impact of structural flatness. In these cases, a sliding fitting portion and a first door panel are not absolutely parallel to each other. However, in this application, the sliding fitting portion and the first door panel in these cases are also defined as being parallel to each other.

To facilitate understanding of an energy storage apparatus provided in embodiments of this application, the following first describes an application scenario of the energy storage apparatus. The energy storage apparatus is a system that can store electric energy by using a specific medium and release the stored energy to generate electricity when necessary. The energy storage apparatus may be used as a load balancing apparatus and a backup power supply and applied to a scenario such as an industrial and commercial park, a large-scale ground power supply station, or a photovoltaic plus storage system. Application of the energy storage apparatus is briefly described by using the scenario of the photovoltaic plus storage system as an example. The photovoltaic plus storage system may usually include a photovoltaic module, a power conversion system, an energy storage apparatus, and a grid-connected inverter. The photovoltaic module may convert light energy into electric energy in a form of a direct current, and output the electric energy to the grid-connected inverter. The grid-connected inverter may convert the electric energy in the form of the direct current into electric energy in a form of an alternating current, and transmit the electric energy in the form of the alternating current to a grid, to implement grid-connection of the photovoltaic plus storage system. When electric energy generated by the photovoltaic module exceeds electric energy required by the grid, the energy storage apparatus may store a part of the electric energy output by a photovoltaic inverter; and when the electric energy output by the photovoltaic module cannot meet electric energy required by the grid, the energy storage apparatus outputs the stored electric energy to the grid, to provide a more stable direct current source for the grid. The power conversion system may convert a grid voltage into a power supply voltage of the energy storage apparatus; or convert a voltage stored in the energy storage apparatus into a grid voltage, and output the grid voltage to the grid.

In addition, based on different requirements on power consumption of application scenarios of energy storage apparatuses, the energy storage apparatuses may be further classified into a cabinet-level energy storage apparatus and a container-level energy storage apparatus.

In an energy storage apparatus in a related technology, a functional component, for example, a battery control module (Battery Control Unit, BCU) is disposed at a specific position in an electrical compartment, which is not well protected, and occupies space of the electrical compartment. Consequently, space utilization of the energy storage apparatus is affected. To facilitate understanding of the energy storage apparatus provided in embodiments of this application, the following describes a specific structure of the energy storage apparatus in detail with reference to the accompanying drawings.

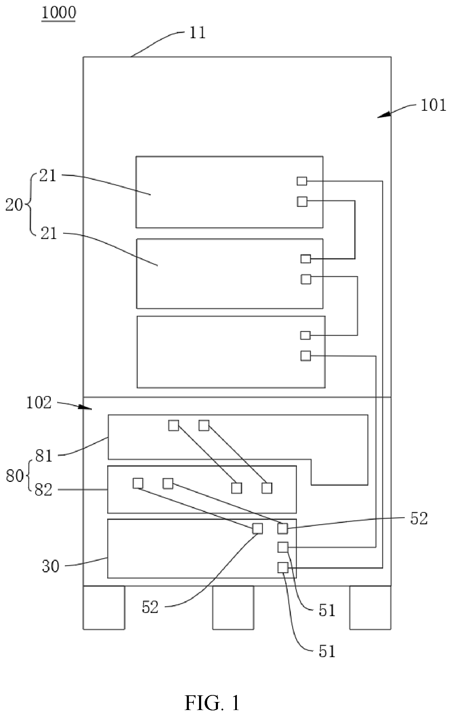

FIG. 1 is a diagram of a structure of an energy storage apparatus 1000 according to an embodiment of this application.

Refer to FIG. 1. The energy storage apparatus includes a cabinet body 11. The cabinet body 11 includes a battery compartment 101 and an electrical compartment 102. The battery compartment 101 and the electrical compartment 102 are stacked along a height direction of the cabinet body 11, and the electrical compartment 102 is located below the battery compartment 101.

The energy storage apparatus 1000 further includes a battery rack 20 disposed in the battery compartment 101, and a rack control module 30 and a power converter 80 that are disposed in the electrical compartment 102, where the battery rack 20 includes a plurality of stacked battery packs 21.

In some embodiments, the power converter 80 includes a PCS (power conversion system) converter, and the rack control module 30 is connected between the PCS converter 81 and the battery rack 20. In this design, the PCS converter 81 may convert a direct current of the battery rack 20 into an alternating current to supply power to an external load. In addition, when a current between the battery rack 20 and the PCS converter 81 is excessively large, the PCS converter 81 can be disconnected from the battery rack 20 in a timely manner through the rack control module 30, to avoid an accident such as fire in the battery rack 20 or the external load.

In some implementations, when a voltage output by the battery rack 20 is lower than a rated voltage, to ensure stability of an output voltage of the energy storage apparatus 1000, the power converter 80 further includes a DC/DC (direct current/direct current) converter. The DC/DC converter 82 is connected between the PCS converter 81 and the rack control module 30, and the rack control module 30 is connected between the DC/DC converter 82 and the battery rack 20, to boost or buck, through the DC/DC converter 82, the voltage output by the battery rack 20. This ensures that the voltage transmitted to the PCS converter 81 remains stable, to ensure the stability of the output voltage of the energy storage apparatus 1000. In addition, when the current between the battery rack 20 and the PCS converter 81 is excessively large, the current between the PCS converter 81 and the battery rack 20 can be cut in a timely manner through the rack control module 30, to avoid the accident such as fire in the battery rack 20 or the external load.

It may be understood that, in this embodiment, the rack control module 30 is connected to the battery rack 20 through a wire. Based on a proper cabling requirement, a pipeline on a liquid cooling side and the wire connected to the battery rack 20 are respectively disposed at two ends of the cabinet body 11, to avoid cabling difficulty and cabling risks caused by mutual interference. It can be learned that, when bending of the wire connected to the battery rack 20 needs to be minimized, a length of the wire needs to be shortened as much as possible. This is also a difficult problem that a person skilled in the art needs to overcome.

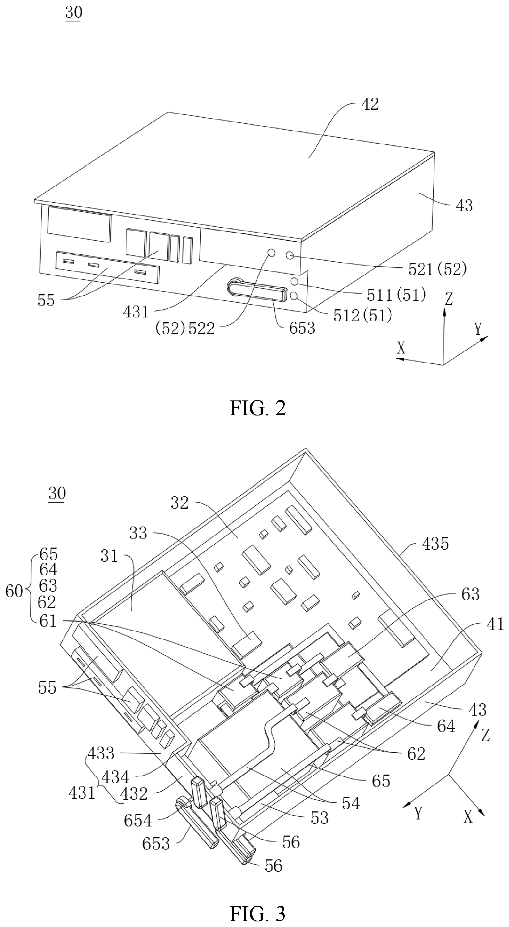

FIG. 2 is a diagram of a structure of a rack control module 30 according to an embodiment of this application. The rack control module 30 in the embodiment of FIG. 2 not only may be used in the energy storage apparatus 1000 in FIG. 1, but also may be used in another energy storage device.

Refer to FIG. 2. The rack control module 30 includes a housing 40 and an input interface 51 and an output interface 52 that are disposed on the housing 40.

The input interface 51 is configured to connect to the battery rack 20. Specifically, there are at least two input interfaces 51, where one input interface 51 is a positive input interface, and the other input interface 51 is a negative input interface.

The output interface 52 is configured to connect to the DC/DC converter 82 or the PCS converter 81 described above. Specifically, there are also at least two output interfaces 52, where one output interface 52 is a positive output interface, and the other output interface 52 is a negative output interface.

The housing 40 includes a bottom wall 41, a top wall 42, and a side wall 43 that connects the top wall 42 and the bottom wall 41. The side wall 43 includes a front panel 431 and a back panel 435, and the front panel 431 and the back panel 435 are disposed opposite to each other.

In some implementations, the bottom wall 41 and the top wall 42 are disposed opposite and parallel to each other.

In some implementations, the housing 40 is approximately in a cuboid shape. The housing 40 has a width direction X, a depth direction Y, and a height direction Z. The width direction X of the housing 40 is set to a length direction of the front panel 431 or an extension direction of a long side of the front panel 431. The height direction Z of the housing 40 is a direction in which the bottom wall 41 and the top wall 42 are opposite to each other. The depth direction Y of the housing 40 is a direction in which the front panel 431 and the back panel 435 of the housing 40 are opposite to each other, and the back panel 435 is the side wall 43 opposite to the front panel 431.

It may be understood that a shape of the housing 40 is not limited to a cuboid, and the housing 40 may alternatively be in another shape, for example, a cylindrical structure or a prismatic structure. For example, when the housing 40 is in a cylindrical shape, the housing 40 has a height direction, and the height direction is still the direction in which the bottom wall 41 and the top wall 42 are opposite to each other. For another example, when a shape of the front panel 431 is a curved panel structure, the width direction X of the housing 40 should also be understood as the extension direction of the long side of the front panel 431.

In some implementations, both the input interface 51 and the output interface 52 are disposed on the front panel 431. Therefore, after the rack control module 30 is assembled into a cabinet body 11, both the input interface 51 and the output interface 52 are exposed, to facilitate connection to a power converter 80 and the battery rack 20 through wires.

FIG. 3 is a diagram of a partial structure of the rack control module 30 in FIG. 2 with the top wall 42 being hidden.

Refer to FIG. 3. The rack control module 30 further includes a switch component 60 located in the housing 40 and an input wire 53 and an output wire 54 that are configured to connect the switch component 60 to the input interface 51 and the output interface 52. In this embodiment, the switch component 60 is connected between the input interface 51 and the output interface 52, the input interface 51 is connected to the battery rack 20, and the output interface 52 is connected to the DC/DC converter 82 or the PCS converter 81. When a current between the battery rack 20 and the PCS converter 81 is excessively large, the current between the PCS converter 81 and the battery rack 20 can be cut in a timely manner through the switch component 60, to avoid an accident such as fire in the battery rack 20 or an external load. Therefore, the switch component 60 can protect the energy storage apparatus 1000, and avoid an electrical fire in the energy storage apparatus 1000.

In some implementations, the input interface 51 is configured to connect, by using a connector 56, the wire connected to the battery rack 20, and the output interface 52 is configured to connect, by using a connector 56, the DC/DC converter 82 or the PCS converter 81 described above.

The input wire 53 is a copper bar. The copper bar not only facilitates connection between the switch component 60 and the input interface 51, but also has good conductivity, thereby reducing a loss. Similarly, the output wire 54 is also a copper bar. The copper bar not only facilitates connection between the switch component 60 and the output interface 52, but also has good conductivity, thereby reducing a loss.

In some implementations, the input wire 53 and the output wire 54 are hard copper bars, to ensure strength of the input wire 53 and the output wire 54, so that the input wire 53 and the output wire 54 can maintain required initial disposition shapes, thereby avoiding an electrical problem caused by contact between the input wire 53 and the output wire 54 and a part of components of the switch component 60.

It may be understood that, in some other implementations, the input wire 53 and the output wire 54 may alternatively be made of soft copper bars or other conductor materials.

In some embodiments, the switch component 60 includes a fuse 61 and a contactor 62. The fuse 61 is connected in series to the contactor 62, and the fuse 61 and the contactor 62 can implement power-off of the switch component 60. For example, when a current of a branch is greater than or equal to a current threshold, a fuse-element may be melted by using heat generated by the fuse 61, so that the branch is disconnected. The contactor 62 may quickly disconnect the branch based on control, for example, may perform disconnection in response to a control signal. In this embodiment, when the current between the battery rack 20 and the PCS converter 81 is excessively high, the current between the PCS converter 81 and the battery rack 20 can be cut in a timely manner through the fuse 61 or the contactor 62, to avoid the accident such as fire in the battery rack 20 or the external load. Therefore, the switch component 60 can protect the energy storage apparatus 1000, and avoid the electrical fire in the energy storage apparatus 1000. It may be understood that both the fuse 61 and the contactor 62 or only one of the fuse 61 and the contactor 62 may be disposed in the rack control module 30 in this application.

In some embodiments, the switch component 60 may further include a leakage current sensor 63. A circuit board 32 is further disposed in the rack control module 30, and a signal processing circuit is integrated on the circuit board 32. The circuit board 32 is disposed in the housing 40. The leakage current sensor 63 detects whether a phase difference of currents flowing through a plurality of current wires connected to the leakage current sensor 63 changes. When the phase difference of the currents flowing through the plurality of current wires changes, a sensing signal is generated and fed back to the signal processing circuit, and the signal processing circuit processes the sensing signal to learn of a magnitude of a leakage current. In this way, whether the leakage current occurs in the circuit can be detected. When the leakage current is relatively large and exceeds a threshold, a signal may be fed back to a control module of the contactor 62 through the signal processing circuit, to control the contactor 62 to perform disconnection. In this way, connection and disconnection performed by the contactor 62 may be actively controlled based on detection information of the leakage current sensor 63, to implement active protection and improve safety performance. In addition, the leakage current sensor 63 has high detection precision and a low false alarm rate, which can effectively ensure safe use of the energy storage apparatus 1000.

In some implementations, another electrical component, for example, a power supply module 33 integrated on the circuit board 32, is further integrated on the circuit board 32. The power supply module 33 may be an alternating current power supply module 33 or a direct current power supply module 33. The power supply module 33 is configured to connect to external utility power or an uninterruptible power supply. Then, the power supply module 33 supplies power to a part of components in the rack control module 30, for example, the contactor 62 in the rack control module 30. It may be understood that, when the energy storage apparatus 1000 works normally, the battery rack 20 may supply power to the part of components in the rack control module 30; and when the energy storage apparatus 1000 is faulty, the utility power or the uninterruptible power supply is used as an emergency power supply to supply power to the part of components in the rack control module 30.

It should be noted that, in some other implementations, the leakage current sensor 63 in the foregoing embodiment may be replaced with a current sensor, to reduce a volume of the circuit board 32.

In some embodiments, the switch component 60 may further include a shunt 64, and a magnitude of a current of a branch in which the shunt 64 is located may be detected through the shunt 64. In this embodiment, the shunt 64 is disposed on one of a live wire and a zero wire that are used to electrically connect the leakage current sensor 63 and the contactor 62, so that a magnitude of a current flowing through the leakage current sensor 63 and the contactor 62 can be detected.

In some other implementations, the shunt 64 described above may alternatively be replaced with a Hall effect sensor.

In some embodiments, the switch component 60 may further include a disconnector 65. The disconnector 65 is connected in series to the fuse 61 and the contactor 62 described above. When a current transmitted by the battery rack 20 to the switch component 60 is excessively large, the current may be cut through the disconnector 65, the fuse 61, or the contactor 62, to avoid an electrical accident in the battery rack 20 or on a user end. The energy storage apparatus 1000 in this embodiment can effectively improve safety performance when the battery rack 20 outputs a large current or a small current. In addition, the disconnector 65 is disposed, so that during maintenance, a user can safely perform maintenance only by disconnecting the disconnector 65, thereby reducing operation and maintenance costs of the user. The fuse 61 is disposed, so that the fuse 61 may provide passive disconnection, thereby further improving safety performance of the energy storage apparatus 1000.

In some implementations, the disconnector 65 includes a current input end 651, a current output end 652, a rotating shaft 654, and a knob 653. The knob 653 is connected to the rotating shaft 654. The current input end 651 and the current output end 652 are located on two opposite sides of the disconnector 65, and the knob 653 is located on a side that is of the disconnector 65 and that is perpendicular to a direction in which the current input end 651 and the current output end 652 are opposite to each other. The rotating shaft 654 extends out of the housing 40 through the front panel 431, and the knob 653 is located on an outer side of the housing 40, to facilitate rotation. To facilitate the knob 653 extending from the front panel 431 of the housing 40 to the housing 40, the current input end 651 and the current output end 652 may be respectively located on two opposite sides of the disconnector 65 in the width direction X of the housing 40.

In some implementations, the disconnector 65, the fuse 61, and the contactor 62 are sequentially connected in series. The input wire 53 is connected to the input interface 51 and the current input end 651 of the disconnector 65, and the output wire 54 is connected to the output interface 52 and an output end of the contactor 62. In this implementation, the current output by the battery rack 20 first passes through the disconnector 65, and then passes through the fuse 61 and the contactor 62. Therefore, when the current output by the battery rack 20 is excessively large and exceeds the threshold, the disconnector 65 is disconnected, so that the current does not pass through the fuse 61, the contactor 62, and the like, thereby preventing the fuse 61 and the contactor 62 from being damaged.

It may be understood that, in some other implementations, positions of the fuse 61 and the contactor 62 may be adjusted. For example, the disconnector 65, the contactor 62, and the fuse 61 are sequentially connected in series. However, the input wire 53 is still connected to the input interface 51 and the current input end 651 of the disconnector 65.

It may be understood that, in some implementations, the switch component 60 may include the fuse 61 and the contactor 62; in some implementations, the switch component 60 may include the fuse 61, the contactor 62, and the disconnector 65; in some implementations, the switch component 60 may include the fuse 61, the contactor 62, and the leakage current sensor 63; in some implementations, the switch component 60 may include the fuse 61, the contactor 62, the shunt 64, and the leakage current sensor 63; or in some implementations, the switch component 60 may include the disconnector 65, the fuse 61, the contactor 62, the shunt 64, and the leakage current sensor 63. Certainly, in some other implementations, the switch component 60 may include another circuit protection component, for example, an ammeter or a voltmeter.

It may be understood that, the fuse 61, the contactor 62, the disconnector 65, the shunt 64, and the leakage current sensor 63 may be connected through wires, for example, may be connected through hard copper bars, or may be connected through wires made of soft copper bars or other conductor materials.

In some embodiments, the rack control module 30 further includes a battery control module 31, and the battery control module 31 is integrated into the housing 40, so that the battery control module 31 can be protected by using the housing 40, for example, a probability that dust or leakage falls into the battery control module is reduced. The battery control module 31 may be powered through the battery rack 20, or may be powered through the power supply module 33 integrated on the circuit board 32, or may be powered through the battery rack 20 in a normal working case and powered through the power supply module 33 integrated on the circuit board 32 in an emergency case, and the power supply module 33 on the circuit board 32 is connected to the uninterruptible power supply or the utility power. In this embodiment, the battery control module 31 is integrated into the housing 40, and the circuit board 32 and the power supply module 33 on the circuit board 32 are located in the rack control module 30, so that the power supply module 33 is connected to the battery control module 31 through a wire, without extending a wire of the power supply module 33 out of the housing 40 to connect to the battery control module 31 outside the housing 40. In this way, there is no need to drill a hole in the housing 40, and layout difficulty of connecting the power supply module 33 and the battery control module 31 through the wire is reduced.

It may be understood that each battery pack 21 further includes a plurality of electrochemical cells. A battery monitor unit BMU (Battery Monitor Unit) is disposed in each battery pack 21, and the battery monitor unit BMU may collect battery data such as a voltage, a temperature, and a current of a battery unit. The battery control module 31 is communicatively connected to each battery monitor unit BMU, for example, may be connected through a signal wire. Each battery monitor unit BMU may report collected battery data such as a voltage, a temperature, and a current of a battery unit to the battery control module 31. The battery control module 31 may find, based on information about each battery pack 21 reported by each battery monitor unit BMU, to-be-processed battery packs 21, and may deliver a control command to BMUs in the battery packs 21 through the battery control module 31, so that the battery monitor units BMUs turn off related control switches.

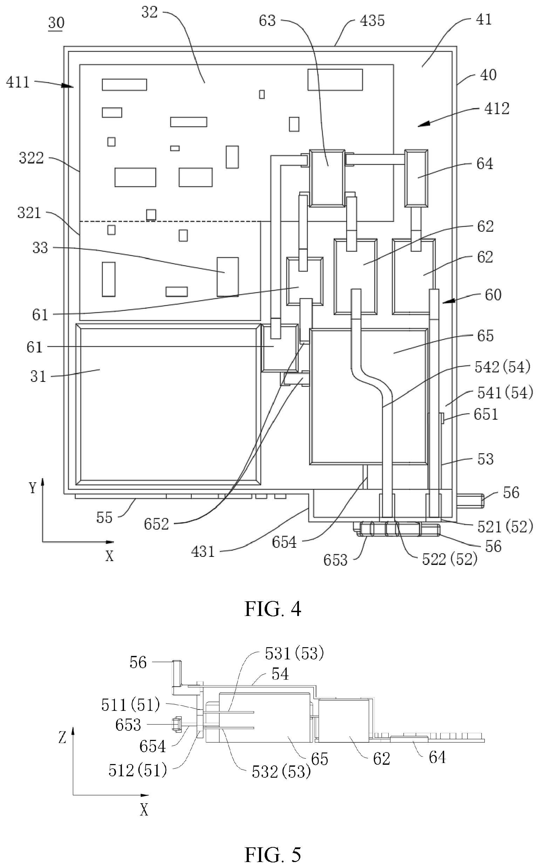

FIG. 4 is a top view of the rack control module 30 in FIG. 3. An embodiment of FIG. 4 shows a position relationship between components in the rack control module 30.

Refer to FIG. 3 and FIG. 4. In some embodiments, in the height direction Z of the housing 40, heights of the input interface 51 and the output interface 52 relative to the bottom wall 41 of the housing 40 are different, and the input wire 53 and the output wire 54 are stacked. Because in the height direction Z of the housing 40, the heights of the input interface 51 and the output interface 52 relative to the bottom wall 41 of the housing 40 are different, and the input wire 53 and the output wire 54 are stacked, space of the housing 40 can be fully utilized in the height direction Z of the housing 40, thereby improving utilization of space in the height direction Z of the housing 40. Therefore, more space can be reserved in the width direction X of the housing 40 to install another functional component. It should be noted that, in this embodiment, that the input wire 53 and the output wire 54 are stacked means that in the height direction Z of the housing 40, the input wire 53 and the output wire 54 at least partially overlap.

The input wire 53 or the output wire 54 extends along the depth direction Y of the housing 40, and the switch component 60 is disposed in the extension direction. Because the input wire 53 or the output wire 54 extends along the depth direction Y of the housing 40, and the switch component 60 is disposed in the extension direction, the switch component 60 is centralized in the direction in which the input wire 53 or the output wire 54 extends along the depth direction Y of the housing 40. Therefore, more space can also be saved in the width direction X of the housing 40 to install another functional component, thereby enriching functions of the rack control module 30.

In some other implementations, a part of components of the switch component 60 and one of the input wire 53 and the output wire 54 are stacked in the height direction Z of the housing 40. Because the part of components of the switch component 60 and one of the input wire 53 and the output wire 54 are stacked in the height direction Z of the housing 40, space of the housing 40 is fully utilized in the height direction Z of the housing 40, so that a compact overall layout of the input wire 53, the output wire 54, and the switch component 60 is ensured. In this way, a proportion of an area of the bottom wall 41 of the housing 40 can be effectively reduced. In other words, in the width direction X of the housing 40, a length proportion of a region for arranging the input wire 53, the output wire 54, and the switch component 60 is effectively reduced. Therefore, more functional components can be integrated into the rack control module 30, thereby improving space utilization of the housing 40.

Both the input interface 51 and the output interface 52 are disposed on the front panel 431 of the housing 40, so that when the rack control module 30 is assembled into the cabinet body 11, both the input interface 51 and the output interface 52 can be exposed, to facilitate connection to the battery rack 20 and the power converter 80. In addition, due to a height difference between the input interface 51 and the output interface 52 relative to the bottom wall 41 of the housing 40, an effective area of the front panel 431 can be utilized in the height direction Z of the housing 40. In this way, in the width direction X of the housing 40, a length proportion of a region, for disposing the input interface 51 and the output interface 52, of the front panel 431 can be reduced, so that more interfaces of other functional components arranged in the housing are disposed on the front panel 431 of the housing 40.

It may be understood that, the rack control module 30 is usually inserted in an assembly cavity. For example, when the housing 40 is in a cuboid shape, after the rack control module 30 is inserted in a cavity, only the front panel 431 is exposed, to improve compactness of a layout and aesthetic appearance. However, most interfaces of the rack control module 30 need to be disposed on the exposed side wall 43. When more components are integrated into the rack control module 30 and functions are more complex, more interfaces need to be disposed on the exposed side wall 43. Therefore, when an area of the exposed side wall 43 remains unchanged, how to dispose a large quantity of interfaces on the exposed side wall 43 is an urgent problem to be resolved. Similarly, after a large quantity of functional components are integrated into the housing 40, a compact layout of the large quantity of functional components in the housing 40 is also an urgent problem to be resolved. However, in this embodiment, in the width direction X of the housing 40, a length proportion of a region, for disposing the input interface 51 and the output interface 52, of the exposed front panel 431 can be reduced, so that more interfaces can be disposed on the front panel 431 of the housing 40. In addition, in the width direction X of the housing 40, a length proportion of a region for arranging the input wire 53, the output wire 54, and the switch component 60 is effectively reduced. Therefore, more functional components can be integrated into the rack control module 30, thereby improving space utilization of the housing 40.

It may be understood that the exposed front panel 431 of the housing 40 may be approximately in a planar panel structure, or may be approximately in a curved panel structure.

In some implementations, in the height direction Z of the housing 40, the input interface 51 is closer to the bottom wall 41 of the housing 40 than the output interface 52.

FIG. 5 is a diagram of a position relationship between the disconnector 65 and the output wire 54 in the rack control module 30 in FIG. 3.

Refer to FIG. 4 and FIG. 5. In some embodiments, the output wire 54 or the input wire 53 and the disconnector 65 are spaced apart and at least partially overlap in the height direction Z of the housing 40. In this embodiment, the output wire 54 or the input wire 53 and the disconnector 65 are spaced apart and at least partially overlap in the height direction Z of the housing 40, so that space that is located above or below the disconnector 65 and that is in the housing 40 can be fully utilized in the height direction Z of the housing 40, thereby improving compactness of a layout. Therefore, more space can be saved in the width direction X of the housing 40 to deploy another component, thereby increasing function diversity.

In some implementations, the disconnector 65 and one of the output wire 54 and the input wire 53 are spaced apart and at least partially overlap in the height direction Z of the housing 40, and the disconnector 65 and the other of the output wire 54 and the input wire 53 are spaced apart and at least partially overlap in the width direction X of the housing 40. In this implementation, because the disconnector 65 and one of the output wire 54 and the input wire 53 are spaced apart and at least partially overlap in the height direction Z of the housing 40, space of the housing 40 can be fully utilized in the height direction Z of the housing 40. The disconnector 65 and the other of the output wire 54 and the input wire 53 are spaced apart and at least partially overlap in the width direction X of the housing 40, so that an increase in the thickness of the housing 40 in the height direction Z of the housing 40 can be effectively avoided. In addition, for the standardized disconnector 65, a connecting end of the disconnector 65 is usually located at two ends of the width direction X of the housing 40, and the other of the output wire 54 and the input wire 53 is disposed on one side of the disconnector 65 in the width direction X of the housing 40, so that the disconnector 65 can be conveniently connected to the wire, thereby effectively reducing a length of the wire.

In some implementations, the disconnector 65 and one of a positive input wire 531 and a negative input wire 532 are spaced apart and at least partially overlap in the height direction Z of the housing 40, and a positive output wire 544, a negative output wire 545, and the other of the positive input wire 531 and the negative input wire 532 are spaced apart and at least partially overlap in the height direction Z of the housing 40. In this embodiment, because the disconnector 65 and one of the positive input wire 531 and the negative input wire 532 are spaced apart and at least partially overlap in the height direction Z of the housing 40, utilization of space in the height direction Z of the housing 40 can be improved. Similarly, because the positive output wire 544, the negative output wire 545, and the other of the positive input wire 531 and the negative input wire 532 are spaced apart and at least partially overlap in the height direction Z of the housing 40, utilization of space in the height direction Z of the housing 40 can also be improved. Therefore, more space can be saved to arrange more components in the housing 40.

Refer to FIG. 5. In some implementations, because both the input wire 53 and the output wire 54 are hard copper bars and have specific strength, when the input wire 53 or the output wire 54 and the disconnector 65 are spaced apart, contact between the output wire 54 and the disconnector 65 can be avoided, so that a short circuit can be avoided between the input wire 53 and the output wire 54 through a surface of the disconnector 65. In this way, when the output wire 54 and the disconnector 65 are stacked in the height direction Z of the housing 40, safety performance can be ensured.

In some implementations, the disconnector 65 is located between the front panel 431 and the back panel and is close to the front panel 431. In this embodiment, after the rack control module 30 is assembled in a cabinet of an energy storage cabinet, usually, only the front panel 431 of the housing 40 is exposed and not blocked, so that the disconnector 65 is located between the front panel 431 and the back panel and is close to the front panel 431. This can reduce a length of the rotating shaft 654 that is of the disconnector 65 and that is configured to install the knob 653, and further provide a higher possibility for a proper layout of another component of the switch component 60, for example, the fuse 61 or the contactor 62, so that lengths of wires connected to the components of the switch component 60 can be reduced while a layout of the switch component 60 is more compact.

In some implementations, the input interface 51 is located on a side that is of the disconnector 65 and on which the current input end 651 is disposed, and the output interface is located on a side that is of the disconnector 65 and on which the current output end 652 is disposed. In this design, a length of a wire connected to the current input end 651 and a length of a wire connected to the current output end 652 can be effectively reduced.

In some implementations, one of the input wire 53 and the output wire 54 is directly connected to the disconnector 65. For example, the input wire 53 is directly connected to the current input end 651 of the disconnector 65, so that a length of the input wire 53 can be effectively reduced.

In some implementations, the input interface 51 is located on a side that is of the front panel 431 and that faces a side on which a wire connected to the battery rack is disposed, to facilitate connection between the input interface 51 and the wire that is connected to the battery rack, and effectively reduce a length of the wire connected to the battery rack and difficulty in routing the wire connected to the battery rack.

Refer to FIG. 4. In some embodiments, the contactor 62 is located between the disconnector 65 and the back panel in the depth direction Y of the housing 40. Because the contactor 62 is located between the disconnector 65 and the back panel in the depth direction Y of the housing 40, and the extension direction of the input wire 53 or the output wire 54 is the depth direction Y of the housing 40, space in the depth direction Y of the housing 40 can be fully utilized. Therefore, more space can be saved in the width direction X of the housing 40, thereby improving layout rationality. In addition, an extension direction of a wire used to connect the contact and the disconnector 65 may also be towards the depth direction Y of the housing 40, eliminating the need for excessive bending, so that a total length of the wires connected to the components of the switch component 60 can be effectively reduced.

In some implementations, the circuit board 32 and the disconnector 65 are spaced apart on the bottom wall 41 of the housing 40, the leakage current sensor 63 is connected to the circuit board 32, and the leakage current sensor 63 is located between the disconnector 65 and the back panel in the depth direction Y of the housing 40. In this embodiment, the circuit board 32 cooperates with the leakage current sensor 63, so that precision of current detection can be effectively improved. The circuit board 32 configured to process the signal of the leakage current sensor 63 and the disconnector 65 are spaced apart. Because the disconnector 65 and the leakage current sensor 63 are arranged along the depth direction Y of the housing 40, and the input wire 53 and the output wire 54 are stacked in the height direction Z of the housing 40, the switch component 60 can be compactly arranged in the housing 40 and occupy smaller space of the housing 40. This provides a possibility for installing the circuit board 32, thereby providing a possibility for using the leakage current sensor 63. Therefore, when an overall volume of the rack control module 30 remains unchanged, detection precision of a current flowing through the switch component 60 is improved.

In some implementations, the leakage current sensor 63 is connected in series between the fuse 61 and the contactor 62, the leakage current sensor 63 and the disconnector 65 at least partially overlap in the depth direction Y of the housing 40, and the leakage current sensor 63 is located between the fuse 61 and the contactor 62 in the width direction X of the housing 40. In this embodiment, because the leakage current sensor 63 and the disconnector 65 at least partially overlap in the depth direction Y of the housing 40, and the leakage current sensor 63 is located between the fuse 61 and the contactor 62 in the width direction X of the housing 40, a layout of the fuse 61, the leakage current sensor 63, and the contactor 62 is more compact, and a length of a wire used to connect the fuse 61, the leakage current sensor 63, and the contactor 62 can be effectively reduced.

In some implementations, the battery control module 31 is configured to collect information about the battery pack 21, and the battery control module 31 and the disconnector 65 are arranged along the width direction X of the housing 40. In this embodiment, because the battery control module 31 and the switch component 60 are arranged along the width direction X of the housing 40, and the switch component 60 is arranged in the extension direction of the input wire 53 or the output wire towards the depth direction Y of the housing 40, the switch component 60 and the battery control module 31 can be effectively isolated, to effectively avoid signal interference of the switch component 60 to the battery control module 31.

Because many electrical components are integrated on the circuit board 32 in this embodiment, the circuit board 32 needs to occupy a relatively large area of the bottom wall 41 of the housing 40. Therefore, a shape of the circuit board 32 and an arrangement in the housing 40 need to be properly designed. In some implementations, the bottom wall 41 includes a first region 411 and a second region 412 that are arranged along the width direction X of the housing 40. The first region 411 is configured to arrange the circuit board 32 and another functional component (for example, the battery control module 31 in the foregoing embodiments), and the second region 412 is configured to arrange overcurrent protection components such as the disconnector 65, the fuse 61, the contactor 62, and the shunt 64, an input wire 53, an output wire 54, and the like. In this design, a functional component using a weak current, an electrical component on the circuit board 32, and the like can be disposed separately from the disconnector 65, the fuse 61, the contactor 62, the shunt 64, the input wire 53, the output wire 54, and the like in which a strong current flows, to avoid impact of the strong current in the second region 412 on the weak-current functional components in the first region 411.

In some implementations, the circuit board 32 includes a first part 321 and a second part 322 that are in a cuboid shape, the first part 321 and the second part 322 are integrally formed, the first part 321 and the second part 322 are arranged along the depth direction Y of the housing 40, a length of the first part 321 is less than a length of the second part 322 in the width direction X of the housing 40, the battery control module 31 and the circuit board 32 are arranged on the bottom wall 41 of the housing 40 along the depth direction Y of the housing 40, and the battery control module 31 is closer to the front panel 431 of the housing 40.

In some implementations, the disconnector 65 and the battery control module 31 are both disposed close to the front panel 431, the first part 321 of the circuit board 32, the fuse 61, and the contactor 62 are arranged along the width direction X of the housing 40, and the leakage current sensor 63 is integrated on the second part 322 of the circuit board 32.

In some implementations, the shunt 64 and the contactor 62 at least partially overlap in the depth direction Y of the housing 40, and the shunt 64 and the leakage current sensor 63 at least partially overlap in the width direction X of the housing 40. In this implementation, because the shunt 64 and the leakage current sensor 63 at least partially overlap in the width direction X of the housing 40, and the shunt 64 is directly connected to the leakage current sensor 63, a length of a wire between the leakage current sensor 63 and the shunt 64 can be reduced. Similarly, because the shunt 64 and the contactor 62 at least partially overlap in the depth direction Y of the housing 40, a length of a wire between the contactor 62 and the shunt 64 can be reduced.

Specifically, the shunt 64 is disposed in the second region 412 at a position corresponding to the second part 322 of the circuit board 32 in a length direction of the housing 40, to facilitate connection to the leakage current sensor.

In some embodiments, the rack control module 30 further includes a plurality of weak-current interfaces 55 configured to transmit weak-current information, the plurality of weak-current interfaces 55 are disposed on the side wall 43 that is of the housing 40 and on which the output interface 52 is disposed, and the plurality of weak-current interfaces 55 are opposite to the battery control module 31 in the depth direction Y of the housing 40. It may be understood that the plurality of weak-current interfaces 55 may include a signal wire interface, for example, a signal wire connected to the battery control module 31; a low-voltage electrical interface, for example, an interface connected to the uninterruptible power supply and the utility power; or a CAN bus interface. Because the plurality of weak-current interfaces 55 are distributed at positions opposite to the battery control module 31, the weak-current interfaces 55 can be separated from strong-current interfaces (such as the input interface 51 and the output interface 52), to meet a safety requirement of strong insulation.

In the rack control module 30 in this embodiment of this application, the input interface 51, the output interface 52, the disconnector 65, the fuse 61, the leakage current sensor 63, the shunt 64, the contactor 62, the input wire 53, and the output wire 54 are properly arranged, so that lengths of the input wire 53, the output wire 54, and the wires connected between the disconnector 65, the fuse 61, the leakage current sensor 63, the shunt 64, and the contactor 62 can be effectively reduced. Therefore, a length of a wire between the input interface 51 and the output interface 52 can be reduced, so that a length of a high-current loop can be reduced, thereby reducing energy consumption. This plays a crucial role in improving system performance and efficiency of the energy storage apparatus 1000, and reducing manufacturing and use costs.

Refer to FIG. 3 to FIG. 5. In some embodiments, the front panel 431 includes a first panel 432 and a second panel 433 that are parallel to each other and a connecting panel 434 that connects the first panel 432 and the second panel 433, the first panel 432 protrudes from the second panel 433 to an outer side of the housing 40 along the depth direction Y of the housing 40, the output interface 52 is disposed on the first panel 432, the input interface 51 is disposed on the second panel 433, and the plurality of weak-current interfaces 55 are disposed on the second panel 433. In this design, a creepage distance between the input interface 51 and the output interface 52 can be increased, thereby improving safety performance of the rack control module 30.

In some implementations, the rotating shaft 654 passes through the second panel 433, the knob 653 is installed on the rotating shaft 654 and is spaced apart from the second panel 433, and a part that is of the input interface 51 and that is located on an outer side of the second panel 433 is located between the second panel 433 and the knob 653. In this design, interference of the input interface 51 and the output interface 52 to the knob 653 when the knob 653 rotates can be avoided.

A projection of the front panel 431 in a direction perpendicular to the width direction of the housing 40 is approximately in a rectangular shape.

In some implementations, the rack control module 30 further includes a sealing cover. The sealing cover is disposed on the second panel 433, and forms an accommodation cavity with the second panel 433. The plurality of weak-current interfaces 55 and the input interface 51 are all located in the accommodation cavity, to improve waterproof performance of the weak-current interfaces 55 and the input interface 51.

It may be understood that a through hole is disposed on a bottom wall of the sealing cover, so that a wire penetrates the accommodation cavity and is connected to the weak-current interfaces 55.

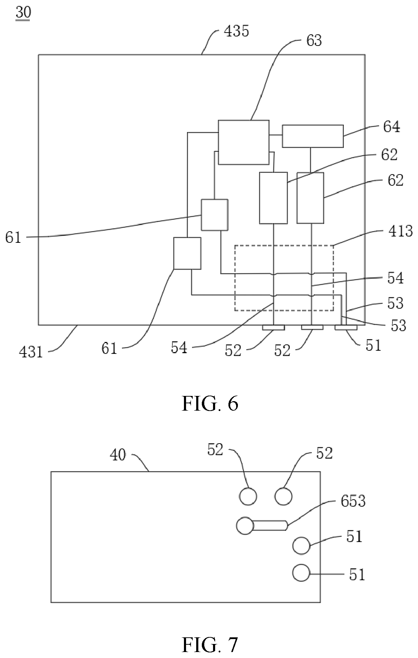

FIG. 6 is a brief diagram of another rack control module 30 according to an embodiment of this application. FIG. 7 is a front view of the rack control module 30 in the embodiment of FIG. 6. Compared with the rack control module 30 in FIG. 3, the rack control module 30 in the embodiment of FIG. 6 is not provided with the disconnector 65, but a preset position of the disconnector 65 is reserved in the rack control module 30 in the embodiment of FIG. 6.

Refer to FIG. 6 and FIG. 7. The rack control module 30 includes a housing 40; a fuse 61, a leakage current sensor 63, and a contactor 62 that are located in the housing 40; an input interface 51 and an output interface 52 that are located on a side wall 43 of the housing 40; and an input wire 53 and an output wire 54.

Along a depth direction Y of the housing 40, the fuse 61 and the contactor 62 are located on a side, of the leakage current sensor 63, facing the side wall 43 that is of the housing 40 and on which the input interface 51 is disposed, the fuse 61 and the contactor 62 and the side wall 43 that is of the housing 40 and on which the input interface 51 is disposed are spaced apart to form reserved space 413, where the reserved space 413 is used to install the disconnector 65. For the reserved space 413 in this embodiment, refer to a region that is in the rack control module 30 in FIG. 4 and that is for installing the disconnector 65. By setting the reserved space 413, a user or a downstream manufacturer may determine, based on a requirement, whether to install the disconnector 65. When the disconnector 65 needs to be installed, the user or the downstream manufacturer may install the disconnector 65; and when the disconnector 65 does not need to be installed, the disconnector 65 may be directly used. Therefore, reconstruction space of the rack control module 30 in this embodiment is increased, thereby improving user experience.

It should be noted that, for the housing 40, the fuse 61, the leakage current sensor 63, the contactor 62, the input interface 51 and the output interface 52 that are located on the side wall 43 of the housing 40, the input wire 53, the output wire 54, a width direction X of the housing 40, the depth direction Y of the housing 40, and the like mentioned in this embodiment, refer to the foregoing embodiments. Details are not described herein again.

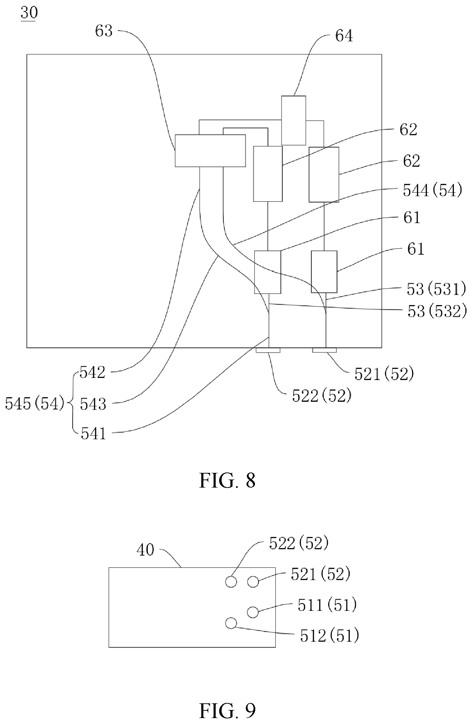

FIG. 8 is a brief diagram of still another rack control module 30 according to an embodiment of this application. FIG. 9 is a front view of the rack control module 30 in the embodiment of FIG. 8. Compared with the rack control module 30 in FIG. 3, the rack control module 30 in the embodiment of FIG. 8 is not provided with the disconnector 65, and a preset position of the disconnector 65 is not reserved in the rack control module 30 in the embodiment of FIG. 8.

Refer to FIG. 8 and FIG. 9. The rack control module 30 includes a housing 40; a fuse 61, a leakage current sensor 63, and a contactor 62 that are located in the housing 40; an input interface 51 and an output interface 52 that are located on a side wall 43 of the housing 40; and an input wire 53 and an output wire 54.

In some embodiments, the input wire 53 includes a positive input wire 531 and a negative input wire 532, the output wire 54 includes a positive output wire 544 and a negative output wire 545, parts, extending along a depth direction Y of the housing 40, of the positive input wire 531 and the positive output wire 544 are spaced apart and overlap in a height direction Z of the housing 40, and parts, extending along the depth direction Y of the housing 40, of the negative input wire 532 and the negative output wire 545 are spaced apart and overlap in the height direction Z of the housing 40. In this embodiment, first, because the parts, extending along the depth direction Y of the housing 40, of the positive input wire 531 and the positive output wire 544 are spaced apart and overlap in the height direction Z of the housing 40, and the parts, extending along the depth direction Y of the housing 40, of the negative input wire 532 and the negative output wire 545 are spaced apart and overlap in the height direction Z of the housing 40, utilization of space in the height direction Z of the housing 40 can be effectively improved, to save space in the width direction X of the housing 40. In addition, because the positive input wire 531 and the positive output wire 544 are arranged in the height direction Z of the housing 40, and the negative input wire 532 and the negative output wire 545 are arranged in the height direction Z of the housing 40, a distance between the positive input wire 531 and the negative output wire 545 can be properly increased, and a distance between the negative input wire 532 and the positive output wire 544 can be properly increased, to reduce a risk of a short circuit.

In some implementations, the input interface 51 includes a positive input interface 511 and a negative input interface 512, the output interface 52 includes a positive output interface 521 and a negative output interface 522, the positive input interface 511 and the positive output interface 521 are spaced apart and overlap in the height direction Z of the housing 40, and the negative input interface 512 and the negative output interface 522 are spaced apart and overlap in the height direction Z of the housing 40. In this implementation, first, the positive input interface 511 and the positive output interface 521 are spaced apart and overlap in the height direction Z of the housing 40, and the negative input interface 512 and the negative output interface 522 are spaced apart and overlap in the height direction Z of the housing 40. Utilization of space of a front panel 431 in the height direction Z of the housing 40 can be effectively improved, to save space of the front panel 431 in the width direction X of the housing 40. In addition, a distance between the positive input interface 511 and the negative output interface 522 and a distance between the positive output interface 521 and the negative input interface 512 can be properly increased, to reduce a risk of a short circuit.

In some implementations, a switch component 60 includes the fuse 61 and the contactor 62, the fuse 61 and the contactor 62 are disposed in the extension direction, and the fuse 61 and the contactor 62 are arranged along the depth direction Y of the housing 40. In this embodiment, because the fuse 61 and the contactor 62 are disposed in the extension direction, and the fuse 61 and the contactor 62 are arranged along the depth direction Y of the housing 40, space of the housing 40 in the depth direction of the housing 40 can be fully utilized, to save more space in the width direction X of the housing 40.

In some implementations, the switch component 60 further includes the leakage current sensor 63, and the leakage current sensor 63 and the contactor 62 are arranged along the width direction X of the housing 40.

In some implementations, the extension direction of the input wire 53 is the same as the depth direction Y of the housing 40, the output wire 54 includes a first segment 541 and a second segment 542 whose extension directions are the same as the depth direction Y of the housing 40 and a middle segment 543 that connects the first segment 541 and the second segment 542, the first segment 541 and the second segment 542 are spaced apart along the width direction X of the housing 40, and the first segment 541 and the input wire 53 overlap in the height direction Z of the housing 40. The first segment 541 is configured to connect to the output interface 52, and the second segment 542 is configured to connect to the leakage current sensor 63.

In this embodiment, a switch component (for example, the disconnector 65) other than the fuse 61 and the contactor 62 may not be configured, thereby reducing a volume of a power supply device. In addition, because the output wire 54 includes the first segment 541 and the second segment 542 whose extension directions are the same as the depth direction Y of the housing 40 and the middle segment 543 that connects the first segment 541 and the second segment 542, and the first segment 541 and the input wire 53 overlap in the height direction Z of the housing 40, space of the housing 40 can be fully utilized in the height direction Z of the housing 40, so that a compact overall layout of the rack control module 30 is ensured. In this way, a proportion of an area of the bottom wall 41 of the housing 40 occupied by the output wire 54 can be effectively reduced. In other words, in the width direction X of the housing 40, use space of the rack control module 30 is saved. Therefore, more functional components can be integrated into the rack control module 30, thereby improving space utilization of the housing 40.

It may be understood that, more parts, stacked in the height direction Z of the housing 40, of the output wire 54 and the input wire 53 indicates more internal space of the housing 40 that can be saved and more functional components that can be placed in the rack control module 30.

It should be noted that, for the housing 40, the fuse 61, the leakage current sensor 63, the contactor 62, the input interface 51, the positive input interface 511, the negative input interface 512, the output interface 52, the positive output interface 521, and the negative output interface 522 that are located on the side wall 43 of the housing 40, the input wire 53, the positive input wire 531, the negative input wire 532, the output wire 54, the positive output wire 544, the negative output wire 545, the width direction X of the housing 40, the depth direction Y of the housing 40, and the like mentioned in this embodiment, refer to the foregoing embodiments. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A rack control module of a battery rack, wherein the rack control module comprises a housing, an input interface and an output interface that are disposed on the housing, a switch component located in the housing, an input wire, and an output wire;
the input interface is configured to electrically connect to an interface of the battery rack, the output interface is configured to electrically connect to a power converter, and the battery rack is a plurality of battery packs connected in series or in parallel; the switch component is configured to disconnect a line between the input interface and the output interface; and the input wire is configured to connect the input interface and the switch component, and the output wire is configured to connect the output interface and the switch component; and
in a height direction of the housing, heights of the input interface and the output interface relative to a bottom wall of the housing are different, and the input wire and the output wire are stacked; and the input wire or the output wire extends along a depth direction of the housing, and the switch component is disposed in the extension direction.

2. The rack control module of the battery rack according to claim 1, wherein the switch component comprises a disconnector, and the output wire or the input wire and the disconnector are spaced apart and at least partially overlap in the height direction of the housing.

3. The rack control module of the battery rack according to claim 2, wherein the disconnector and one of the output wire and the input wire are spaced apart and at least partially overlap in the height direction of the housing, and the disconnector and the other of the output wire and the input wire are spaced apart and at least partially overlap in a width direction of the housing.

4. The rack control module of the battery rack according to claim 2 or 3, wherein the input wire comprises a positive input wire and a negative input wire, the output wire comprises a positive output wire and a negative output wire, the disconnector and one of the positive input wire and the negative input wire are spaced apart and at least partially overlap in the height direction of the housing, and the positive output wire, the negative output wire, and the other of the positive input wire and the negative input wire are spaced apart and at least partially overlap in the height direction of the housing.

5. The rack control module of the battery rack according to any one of claims 2 to 4, wherein in the depth direction of the housing, the housing comprises a front panel and a back panel that are opposite to each other, and the disconnector is located between the front panel and the back panel and is close to the front panel.

6. The rack control module of the battery rack according to claim 5, wherein the switch component further comprises a contactor, and the contactor is located between the disconnector and the back panel in the depth direction of the housing.

7. The rack control module of the battery rack according to claim 5 or 6, wherein the switch component further comprises a leakage current sensor, the rack control module further comprises a circuit board, the circuit board and the disconnector are spaced apart on the bottom wall of the housing, the leakage current sensor is connected to the circuit board, a signal processing circuit on the circuit board is configured to process a signal fed back by the leakage current sensor, and the leakage current sensor is located between the disconnector and the back panel in the depth direction of the housing.

8. The rack control module of the battery rack according to any one of claims 2 to 7, wherein the rack control module further comprises a battery control module disposed in the housing, the battery control module is configured to collect information about the battery pack, and the battery control module and the disconnector are arranged along the width direction of the housing.

9. The rack control module of the battery rack according to claim 1, wherein the input interface and the output interface are spaced apart in the height direction of the housing, the input wire extends along the depth direction of the housing, a part of the output wire extends along the depth direction of the housing, and the part of the output wire and the input wire are spaced apart and overlap in the height direction of the housing.

10. The rack control module of the battery rack according to claim 9, wherein the input wire comprises a positive input wire and a negative input wire, the output wire comprises a positive output wire and a negative output wire, parts, extending along the depth direction of the housing, of the positive input wire and the positive output wire are spaced apart and overlap in the height direction of the housing, and parts, extending along the depth direction of the housing, of the negative input wire and the negative output wire are spaced apart and overlap in the height direction of the housing.

11. The rack control module of the battery rack according to claim 9 or 10, wherein the switch component comprises a fuse and a contactor, the fuse and the contactor are disposed in the extension direction, and the fuse and the contactor are arranged along the depth direction of the housing.

12. The rack control module of the battery rack according to claim 1, wherein the switch component comprises a contactor; along the depth direction of the housing, the contactor is disposed in the extension direction; and in the extension direction, the contactor and a front panel of the housing are spaced apart to form reserved space, and the reserved space is used to install a disconnector.

13. The rack control module of the battery rack according to any one of claims 1 to 12, wherein the front panel of the housing comprises a first panel and a second panel that are parallel to each other and a connecting panel that connects the first panel and the second panel, the first panel protrudes from the second panel to an outer side of the housing along the width direction of the housing, the output interface is disposed on the first panel, and the input interface is disposed on the second panel.

14. The rack control module of the battery rack according to any one of claims 1 to 13, wherein both the input wire and the output wire are hard copper bars.

15. An energy storage apparatus, wherein the energy storage apparatus comprises a box, a battery rack located in the box, a power converter, and the rack control module according to any one of claims 1 to 14, an input interface of the rack control module is configured to electrically connect to the battery rack, and an output interface of the rack control module is configured to electrically connect to the power converter.
